# EUROPEAN PATENT APPLICATION

(11) **EP 4 722 894 A1**
(43) Date of publication of application: **08.04.2026**
(21) Application number: 25188622.2
(22) Date of filing: 09.07.2025
(51) Int. Cl.: G06F 8/51, G06F 9/54, G06F 8/73

(54) **AUTOMATED OPERATORS FOR CONSTRUCTION OF DECLARATIVE INTERFACES FROM IMPERATIVE INTERFACES**

(30) Priority: 03.10.2024 US 202418905847
(71) Applicant: Red Hat, LLC, Raleigh, NC 27601 (US)
(72) Inventor: GALLAGHER, Brian, Raleigh, 27601 (US); STOKLUSKA, Michal Dariusz, Raleigh, 27601 (US)
(74) Representative: Murgitroyd & Company

(57) **Abstract**

A Custom Resource (CR) is generated within a code repository of a legacy application based on intercepted Application Programming Interface (API) calls to an imperative API of the legacy application. The intercepted API calls relate to a particular type of entity. The CR is defined by a Custom Resource Definition (CRD) associated with the particular type of entity. The CR is one of a plurality of CRs of the code repository that collectively define a correct state of the legacy application. Responsive to a difference between a current state of the legacy application and the correct state of the legacy application, an automated operator makes an imperative API call to the imperative API of the legacy application that modifies the current state of the legacy application to match the correct state of the legacy application.

## Description

### BACKGROUND

Application Programming Interfaces (APIs) are used by software applications to communicate and interact with each other. To do so, APIs provide a set of defined protocols for accessing the functionality of an external system. APIs can expose the underlying services of a system to external applications without exposing internal details. Generally, APIs are categorized by the interaction style they support. Imperative interfaces, for example, refer to a category of APIs which require explicit commands or instructions from the calling application. With imperative interfaces, the client specifies a sequence of commands or actions to control the order and/or manner in which tasks are executed.

### SUMMARY

A Custom Resource (CR) can be generated within a code repository of a legacy application based on intercepted API calls to an imperative API of the legacy application. The CR can be defined by a Custom Resource Definition (CRD) associated with a particular type of entity affected by the intercepted API calls or otherwise related. The CR can be one of a plurality of CRs of the code repository that collectively define a correct state of the legacy application. If a difference is detected between a current state of the legacy application and the correct state of the legacy application, an automated operator can generate an imperative API call to the imperative API of the legacy application that modifies the current state of the legacy application to match the correct state of the legacy application.

In aspects of the disclosure, a method, system and non-transitory computer-readable storage according to the claims are provided.

In one aspect, a method is provided. The method includes generating, by a computing system comprising one or more processor devices, a CR within a code repository of a legacy application based on intercepted API calls to an imperative API of the legacy application, wherein the intercepted API calls relate to a particular type of entity, wherein the CR is defined by a CRD associated with the particular type of entity, and wherein the CR is one of a plurality of CRs of the code repository that collectively define a correct state of the legacy application. The method further includes, responsive to a difference between a current state of the legacy application and the correct state of the legacy application, making, by an automated operator implemented by the computing system, an imperative API call to the imperative API of the legacy application that modifies the current state of the legacy application to match the correct state of the legacy application.

The plurality of CRs may be defined by a plurality of CRDs comprising the CRD.

Prior to generating the CR within the code repository of the legacy application, the method may further comprise intercepting, by the computing system, the intercepted API calls to the imperative API, wherein the intercepted API calls comprise one or more imperative API calls, the one or more imperative API calls indicative of requests to at least one of: add a new entity of the particular type of entity; modify a characteristic of an existing entity of the particular type of entity; or remove the existing entity of the particular type of entity.

Prior to intercepting the intercepted API calls, the method may further comprise obtaining, by the computing system, API specification information for the imperative API of the legacy application, wherein the API specification information defines behavior of the imperative API, and generating, by the computing system, the plurality of CRDs based on the API specification information.

Prior to making the imperative API call, the method may further comprise identifying, by the automated operator implemented by the computing system, the difference between the current state of the legacy application and the correct state of the legacy application.

Intercepting the intercepted API calls to the imperative API may comprise intercepting, by the computing system, a first imperative API call of the one or more imperative API calls, the first imperative API call indicative of a request to add the new entity of the particular type of entity, wherein identifying the difference between the current state of the legacy application and the correct state of the legacy application comprises determining, by the automated operator implemented by the computing system, that the current state of the legacy application comprises a first quantity of entities of the particular type of entity associated with the CRD, and determining, by the automated operator implemented by the computing system, that the first quantity of entities of the particular type of entity is less than a second quantity of CRs within the code repository that are defined by the CRD.

Generating the plurality of CRDs based on the API specification information may comprise generating, by the computing system, a unit of software instructions that, when executed, implements the automated operator, wherein the unit of software instructions is based on the plurality of CRDs, and executing, by the computing system, the unit of software instructions to implement the automated operator.

Generating the plurality of CRDs based on the API specification information may comprise processing, by the computing system, the API specification information with a machine-learned language model to obtain the plurality of CRDs.

Generating the plurality of CRDs based on the API specification information may comprise, based on the API specification information, generating, by the computing system, call mapping information that indicates one or more types of imperative API calls to make when a particular type of difference is identified between the current state of the legacy application and the correct state of the legacy application, wherein making the one or more imperative API calls to the imperative API of the legacy application comprises selecting, by the computing system, the one or more imperative API calls based on the call mapping information.

Generating the plurality of CRDs based on the API specification information may comprise obtaining, by the computing system, application state data from an existing data store for the legacy application, determining, by the computing system, that the current state of the legacy application comprises a plurality of existing entities of a first type of entity associated with a first CRD of the plurality of CRDs, and for each existing entity of the plurality of existing entities of the first type of entity, generating, by the computing system, a particular CR of the plurality of CRs within the code repository of the legacy application based on the first CRD, wherein the particular CR represents the existing entity within the current state of the legacy application, wherein the particular CR is defined by the first CRD.

The method may further comprise receiving, by the automated operator implemented by the computing system, a declarative API call for the legacy application, wherein the declarative API call defines a desired state of the legacy application different than the current state of the legacy application, generating, by the computing system, one or more additional CRs for the legacy application within the code repository to modify the correct state of the legacy application to match the desired state of the legacy application, and making, by the automated operator implemented by the computing system, one or more additional imperative API calls to the imperative API of the legacy application that modify the current state of the legacy application to match the desired state of the legacy application.

Making the one or more additional imperative API calls for the imperative API of the legacy application may comprise identifying, by the automated operator implemented by the computing system, a new difference between the current state of the legacy application and the correct state of the legacy application, and responsive to identifying the new difference, generating, by the automated operator implemented by the computing system, the one or more additional imperative API calls to the imperative API of the legacy application that modify the current state of the legacy application to match the desired state of the legacy application.

In another aspect, a computing system is provided. The computing device includes a memory, and one or more processor devices coupled to the memory. The one or more processor devices are configured to generate a CR within a code repository of a legacy application based on intercepted API calls to an imperative API of the legacy application, wherein the intercepted API calls relate to a particular type of entity, wherein the CR is defined by a CRD associated with the particular type of entity, and wherein the CR is one of a plurality of CRs of the code repository that collectively define a correct state of the legacy application. The one or more processor devices are further to, responsive to a difference between a current state of the legacy application and the correct state of the legacy application, make, by an automated operator implemented by the computing system, an imperative API call to the imperative API of the legacy application that modifies the current state of the legacy application to match the correct state of the legacy application.

The plurality of CRs may be defined by a plurality of CRDs comprising the CRD.

Prior to generating the CR within the code repository of the legacy application, the one or more processor devices may be further configured to intercept, by the computing system, the intercepted API calls to the imperative API, wherein the intercepted API calls comprise one or more imperative API calls, the one or more imperative API calls indicative of requests to at least one of: add a new entity of the particular type of entity; modify a characteristic of an existing entity of the particular type of entity; or remove the existing entity of the particular type of entity.

Prior to intercepting the intercepted API calls, the one or more processor devices may be further configured to obtain, by the computing system, API specification information for the imperative API of the legacy application, wherein the API specification information defines behavior of the imperative API, and generate the plurality of CRDs based on the API specification information.

Prior to making the imperative API call, the one or more processor devices may be further configured to identify, by the automated operator implemented by the computing system, the difference between the current state of the legacy application and the correct state of the legacy application.

To intercept the intercepted API calls to the imperative API, the one or more processor devices may be configured to intercept a first imperative API call of the one or more imperative API calls, the first imperative API call indicative of a request to add the new entity of the particular type of entity, wherein identifying the difference between the current state of the legacy application and the correct state of the legacy application comprises determining, by the automated operator implemented by the computing system, that the current state of the legacy application comprises a first quantity of entities of the particular type of entity associated with the CRD, and determining, by the automated operator implemented by the computing system, that the first quantity of entities of the particular type of entity is less than a second quantity of CRs within the code repository that are defined by the CRD.

To generate the plurality of CRDs based on the API specification information, the one or more processor devices may be configured to generate a unit of software instructions that, when executed, implements the automated operator, wherein the unit of software instructions is based on the plurality of CRDs, and execute the unit of software instructions to implement the automated operator.

To generate the plurality of CRDs based on the API specification information, the one or more processor devices may be configured to process the API specification information with a machine-learned language model to obtain the plurality of CRDs.

To generate the plurality of CRDs based on the API specification information, the one or more processor devices may be configured to, based on the API specification information, generate call mapping information that indicates one or more types of imperative API calls to make when a particular type of difference is identified between the current state of the legacy application and the correct state of the legacy application, wherein making the one or more imperative API calls to the imperative API of the legacy application comprises selecting the one or more imperative API calls based on the call mapping information.

To generate the plurality of CRDs based on the API specification information, the one or more processor devices may be configured to obtain application state data from an existing data store for the legacy application, determine that the current state of the legacy application comprises a plurality of existing entities of a first type of entity associated with a first CRD of the plurality of CRDs, and for each existing entity of the plurality of existing entities of the first type of entity, generate a particular CR of the plurality of CRs within the code repository of the legacy application based on the first CRD, wherein the particular CR represents the existing entity within the current state of the legacy application, wherein the particular CR is defined by the first CRD.

The one or more processor devices may be further configured to receive, by the automated operator implemented by the computing system, a declarative API call for the legacy application, wherein the declarative API call defines a desired state of the legacy application different than the current state of the legacy application, generate one or more additional CRs for the legacy application within the code repository to modify the correct state of the legacy application to match the desired state of the legacy application, and make, by the automated operator implemented by the computing system, one or more additional imperative API calls to the imperative API of the legacy application that modify the current state of the legacy application to match the desired state of the legacy application.

To make the one or more additional imperative API calls for the imperative API of the legacy application, the one or more processor devices may be configured to identify, by the automated operator implemented by the computing system, a new difference between the current state of the legacy application and the correct state of the legacy application, and responsive to identifying the new difference, generate, by the automated operator implemented by the computing system, the one or more additional imperative API calls to the imperative API of the legacy application that modify the current state of the legacy application to match the desired state of the legacy application.

In another aspect, a non-transitory computer-readable storage medium is provided. The non-transitory computer-readable storage medium includes executable instructions to cause one or more processor devices to generate a CR within a code repository of a legacy application based on intercepted API calls to an imperative API of the legacy application, wherein the intercepted API calls relate to a particular type of entity, wherein the CR is defined by a CRD associated with the particular type of entity, and wherein the CR is one of a plurality of CRs of the code repository that collectively define a correct state of the legacy application. The instructions further cause the processor device to, responsive to a difference between a current state of the legacy application and the correct state of the legacy application, make, by an automated operator implemented by the one or more processor devices, an imperative API call to the imperative API of the legacy application that modifies the current state of the legacy application to match the correct state of the legacy application.

The plurality of CRs may be defined by a plurality of CRDs comprising the CRD.

Prior to generating the CR within the code repository of the legacy application, the one or more processor devices may be further caused to intercept, by the computing system, the intercepted API calls to the imperative API, wherein the intercepted API calls comprise one or more imperative API calls, the one or more imperative API calls indicative of requests to at least one of: add a new entity of the particular type of entity; modify a characteristic of an existing entity of the particular type of entity; or remove the existing entity of the particular type of entity.

Prior to intercepting the intercepted API calls, the one or more processor devices may be further caused to obtain, by the computing system, API specification information for the imperative API of the legacy application, wherein the API specification information defines behavior of the imperative API, and generate the plurality of CRDs based on the API specification information.

Prior to making the imperative API call, the one or more processor devices may be further caused to identify, by the automated operator implemented by the computing system, the difference between the current state of the legacy application and the correct state of the legacy application.

To intercept the intercepted API calls to the imperative API, the one or more processor devices may be caused to intercept a first imperative API call of the one or more imperative API calls, the first imperative API call indicative of a request to add the new entity of the particular type of entity, wherein identifying the difference between the current state of the legacy application and the correct state of the legacy application comprises determining, by the automated operator implemented by the computing system, that the current state of the legacy application comprises a first quantity of entities of the particular type of entity associated with the CRD, and determining, by the automated operator implemented by the computing system, that the first quantity of entities of the particular type of entity is less than a second quantity of CRs within the code repository that are defined by the CRD.

To generate the plurality of CRDs based on the API specification information, the one or more processor devices may be caused to generate a unit of software instructions that, when executed, implements the automated operator, wherein the unit of software instructions is based on the plurality of CRDs, and execute the unit of software instructions to implement the automated operator.

To generate the plurality of CRDs based on the API specification information, the one or more processor devices may be caused to process the API specification information with a machine-learned language model to obtain the plurality of CRDs.

To generate the plurality of CRDs based on the API specification information, the one or more processor devices may be caused to, based on the API specification information, generate call mapping information that indicates one or more types of imperative API calls to make when a particular type of difference is identified between the current state of the legacy application and the correct state of the legacy application, wherein making the one or more imperative API calls to the imperative API of the legacy application comprises selecting the one or more imperative API calls based on the call mapping information.

To generate the plurality of CRDs based on the API specification information, the one or more processor devices may be caused to obtain application state data from an existing data store for the legacy application, determine that the current state of the legacy application comprises a plurality of existing entities of a first type of entity associated with a first CRD of the plurality of CRDs, and for each existing entity of the plurality of existing entities of the first type of entity, generate a particular CR of the plurality of CRs within the code repository of the legacy application based on the first CRD, wherein the particular CR represents the existing entity within the current state of the legacy application, wherein the particular CR is defined by the first CRD.

The one or more processor devices may be further caused to receive, by the automated operator implemented by the computing system, a declarative API call for the legacy application, wherein the declarative API call defines a desired state of the legacy application different than the current state of the legacy application, generate one or more additional CRs for the legacy application within the code repository to modify the correct state of the legacy application to match the desired state of the legacy application, and make, by the automated operator implemented by the computing system, one or more additional imperative API calls to the imperative API of the legacy application that modify the current state of the legacy application to match the desired state of the legacy application.

To make the one or more additional imperative API calls for the imperative API of the legacy application, the one or more processor devices may be caused to identify, by the automated operator implemented by the computing system, a new difference between the current state of the legacy application and the correct state of the legacy application, and responsive to identifying the new difference, generate, by the automated operator implemented by the computing system, the one or more additional imperative API calls to the imperative API of the legacy application that modify the current state of the legacy application to match the desired state of the legacy application.

Individuals will appreciate the scope of the disclosure and realize additional aspects thereof after reading the following detailed description of the examples in association with the accompanying drawing figures.

### BRIEF DESCRIPTION OF THE DRAWINGS

The accompanying drawing figures incorporated in and forming a part of this specification illustrate several aspects of the disclosure and, together with the description, serve to explain the principles of the disclosure.
Figure 1 is a block diagram of a computing environment suitable for automated operators for construction of declarative interfaces from imperative interfaces according to some implementations of the present disclosure.
Figure 2 is a data flow diagram for leveraging the automated operator of Figure 1 as a declarative API client according to some implementations of the present disclosure.
Figure 3 is a flowchart illustrating operations performed by the computing system of Figure 1 for construction of declarative APIs for imperative APIs using an automated operator, according to one example.
Figure 4 is a block diagram of the computing device of Figure 1 for construction of declarative APIs for imperative APIs using an automated operator, according to one example.
Figure 5 is a block diagram of the computing system suitable for implementing examples according to one example.

### DETAILED DESCRIPTION

The examples set forth below represent the information to enable individuals to practice the examples and illustrate the best mode of practicing the examples. Upon reading the following description in light of the accompanying drawing figures, individuals will understand the concepts of the disclosure and will recognize applications of these concepts not particularly addressed herein. It should be understood that these concepts and applications fall within the scope of the disclosure and the accompanying claims.

Any flowcharts discussed herein are necessarily discussed in some sequence for purposes of illustration, but unless otherwise explicitly indicated, the examples and claims are not limited to any particular sequence or order of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

Application Programming Interfaces (APIs) are used by software applications to communicate and interact with each other. To do so, APIs provide a set of defined protocols for accessing the functionality of an external system. APIs can expose the underlying services of a system to external applications without exposing internal details. Generally, APIs are categorized by the interaction style they support. Imperative interfaces, for example, refer to a category of APIs which require explicit commands or instructions from the calling application. With imperative interfaces, the client specifies a sequence of commands or actions, controlling the order in which tasks are executed.

On the opposite end, APIs belonging to the category of "declarative" interfaces focus on describing an objective, expected output, expected outcome, expected application state, etc. rather than detailing which operations to perform specifically (and/or how to do so). For example, assume that an application (e.g., a hypervisor, etc.) has instantiated ten virtual devices. To add an eleventh device, an imperative API call might include a request to instantiate one device, while a declarative API call might "declare" that eleven devices should currently be instantiated and let the hypervisor application determine whether instantiation of a new device is necessary.

In comparison to declarative APIs, imperative APIs offer precise control over the interaction flow. However, imperative APIs generally demand substantially more effort from the user that calls the API. Further, imperative APIs require a substantial knowledge base to use efficiently (e.g., which operations are supported by the API, which order of operations to provide to the API, etc.). Due to these inefficiencies, declarative APIs have become a preferred choice for developers in a variety of different industries.

However, many industries rely on existing software that still leverage imperative APIs. Although some techniques have been created to convert imperative APIs to declarative APIs, these techniques are generally inefficient and/or inaccurate. Further, when moving to support declarative APIs, a "source of truth" must be established for the application so that changes to application state caused by declarative API requests are accounted for. This requirement further exacerbates the difficulties of converting imperative APIs to declarative APIs, making the process prohibitively expensive.

Accordingly, implementations described herein propose construction of declarative APIs from imperative APIs. To do so, a computing system can obtain an intercepted API call to an imperative API of a legacy application. For example, the imperative API call may include a request to instantiate a new virtual device. In particular, the imperative API calls can be associated with a particular type of entity. To follow the previous example, the imperative API calls can be associated with the particular type of virtual device the imperative API calls requested to be instantiated.

The computing system can generate a Custom Resource (CR) within a code repository of a legacy application based on the intercepted API call. As described herein, a "Custom Resource" can refer to a data object that stores structured data in custom fields. For example, the CRs described herein can refer to CRs in the context of Kubernetes^{®} and/or other virtualization orchestration services. The code repository of the legacy application can be any type or manner of service that maintains a "correct state" or "source of truth" for the legacy application. Such services may also be referred to as "Continuous Integration / Continuous Delivery (CI/CD)-enabling services." Examples of such code repository services include GitOps by Gitlabs^{®}, Red Hat^{®} Openshift^{®} GitOps, etc.

The CR generated by the computing system can be defined by a Custom Resource Definition (CRD). The CRD can be associated with the particular type of entity related to the intercepted API calls. For example, assume that the imperative API calls instantiate a new virtual network adapter. The computing system can access a CRD that is associated with virtual network adapters, and can create a CR for the new virtual network adapter. The CR can "represent" the virtual network adapter in the code repository of the legacy application that defines the "correct state" or "source of truth" in the application. The CR generated by the computing system can be one of a plurality of CRs stored to the code repository for the legacy application, with each of the CRs representing a certain entity (e.g., data object, virtual device, transaction, etc.) within the legacy application. As such, the plurality of CRs can collectively define the correct state of the legacy application.

In some implementations, prior to generating the CR based on the CRD, the computing system can generate the CRD and a plurality of other CRDs based on API specification information for the imperative API. The API specification information can be a user manual, guide, tutorial, documentation, etc. describing commands, syntax, and the like for interacting with the imperative API. For example, the computing system may process the API specification information with a machine-learned language model to generate the CRDs.

The computing system can identify a difference between a current state of the legacy application and a correct state of the legacy application. As described herein, the "current" state of the legacy application can refer to features of entities currently included in the legacy application. For example, if the legacy application included multiple instances of different virtual devices, the features of the entities can include a time of instantiation, a number of devices, a number of devices of a particular type, etc.

For a specific example, the computing system can determine that the current state of the legacy application includes a first quantity of entities of the particular type of entity associated with the CRD (e.g., the type of entity related to the intercepted API calls). The computing system can further determine that the first quantity of entities of the particular type of entities is less than a second quantity of CRs within the code repository that are defined by the CRD. This can occur if the imperative API calls are intercepted in a manner that does not permit the imperative API calls to reach the imperative API.

Responsive to the difference between the correct state of the legacy application and the correct state of the legacy application, the computing system can use an automated operator to make an imperative API call to the imperative API of the legacy application. The imperative API call can modify the current state of the legacy application to match the correct state of the legacy application.

The automated operator can be implemented based on the CRDs generated for the legacy application. For example, the computing system can generate a unit of software instructions based on the plurality of CRDs. The unit of software instructions, when executed, can implement the automated operator. The automated operator can be configured to generate imperative API calls to eliminate differences between the current state of the legacy application and the "correct" state of the legacy application. For example, if the current state of the legacy application includes nine virtual network adapters and the code repository for the legacy application includes ten CRs to represent ten respective virtual network adapters, the automated operator can detect the difference and, in response, generate an imperative API call to instantiate a tenth virtual network adapter in the legacy application.

For a more specific example, assume that the computing system intercepts an imperative API call to instantiate a tenth instance of a particular type of virtual network adapter. The computing system can generate the CR based on the CRD that defines CRs for the particular type of virtual network adapter. The CR can be generated within the code repository along with nine other CRs previously stored to the code repository to represent the previous nine virtual network adapter instances. The computing system can then make (i.e., replicate) the imperative API call originally sent to the imperative API. In such fashion, implementations described herein can maintain a "source of truth" or correct state for a legacy application, thus enabling conversion of an imperative API to a declarative API.

Once implemented, the automated operator can be configured to directly receive declarative API calls and convert them to imperative API calls. For example, assume that the automated operator receives a declarative API call which states that the number of instantiated virtual network adapters should be fifteen. If the current state of the legacy application includes ten virtual network adapters, the automated operator can generate five new CRs within the code repository based on a CRD associated with the virtual network adapter. The automated operator can then make five imperative API calls to the imperative API of the legacy application to make the current state of the legacy application match the correct state of the legacy application (e.g., as defined by the code repository). In such fashion, the automated operator can serve as an intermediary to implement declarative API functionality while obviating the need to re-design the imperative API to be a declarative API, which can be prohibitively expensive.

Aspects of the present disclosure provide a number of technical effects and benefits. As one example technical effect and benefit, implementations described herein enable declarative API functionality while obviating the need to re-design existing imperative APIs, which can be prohibitively difficult if not impossible in certain scenarios. For example, if the legacy application being used is no longer actively developed, or is developed by a relatively small team, existing resources may be insufficient to convert an imperative API to a declarative API. For another example, if the entity that created the legacy application no longer exists, the codebase for the legacy application may be unavailable, thus making conversion of the imperative API prohibitively difficult. However, implementations described herein enable declarative API functionality with minimal resource usage and without access to source code for existing legacy applications.

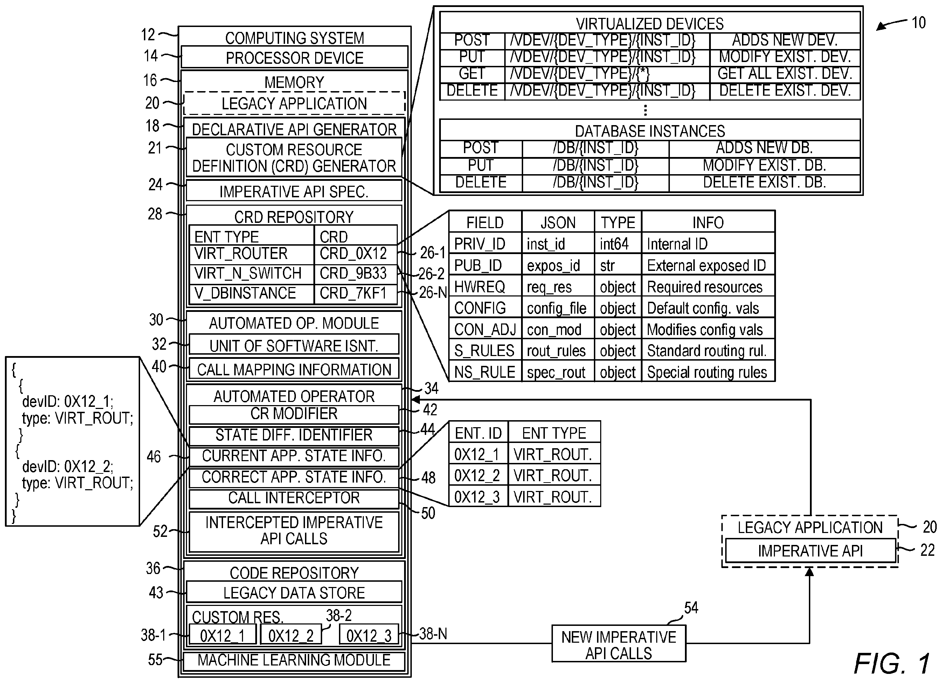

Figure 1 is a block diagram of a computing environment 10 suitable for automated operators for construction of declarative interfaces from imperative interfaces according to some implementations of the present disclosure. A computing environment 10 can include a computing system 12 with one or more processor device(s) 14 and a memory 16. As described herein, the "computing environment" 10 can be any type or manner of computing environment (e.g., a collection of computing devices, systems, and related infrastructure associated with a particular entity or organization), such as a "confidential" computing environment in which sensitive data and code is protected during processing, a "public" computing environment, etc. For example, the computing environment 10 can be or otherwise include a confidential computing "enclave" that leverages hardware-based TEEs and secure virtualization technologies, such as memory encryption, to isolate critical computations and prevent unauthorized access to data while in use. For another example, the computing environment 10 can be a distributed computing environment that utilizes computing resources across a variety of different types of devices (e.g., servers, virtualized devices, user devices, Internet-of-Things (IoT) devices, etc.).

In some implementations, the computing system 12 may be a computing system that includes multiple computing devices. Alternatively, in some implementations, the computing system 12 may be one or more computing devices within a computing system that includes multiple computing devices. Similarly, the processor device(s) 14 may include any computing or electronic device capable of executing software instructions to implement the functionality described herein.

The memory 16 can be or otherwise include any device(s) capable of storing data, including, but not limited to, volatile memory (random access memory, etc.), non-volatile memory, storage device(s) (e.g., hard drive(s), solid state drive(s), etc.). In some implementations, the memory 16 can include a containerized unit of software instructions (i.e., a "packaged container"). The containerized unit of software instructions can collectively form a container that has been packaged using any type or manner of containerization technique.

A containerized unit of software instructions can include one or more applications, and can further implement any software or hardware necessary for execution of the containerized unit of software instructions within any type or manner of computing environment. For example, the containerized unit of software instructions can include software instructions that contain or otherwise implement all components necessary for process isolation in any environment (e.g., the application, dependencies, configuration files, libraries, relevant binaries, etc.).

In some implementations, the computing environment 10 can include multiple types of nodes. As described herein, a "node" generally refers to a discrete unit of hardware and/or software resources. In some instances, nodes within the computing environment 10 can be configured to perform specific tasks. For example, some nodes within the computing environment 10 can be configured as "compute" or "processing" nodes that handle processing tasks or provide processing-heavy services. Compute nodes are generally allocated with hardware devices that can facilitate processing tasks, such as Graphics Processing Units (GPUs), Central Processing Units (CPUs), Application-specific Integrated Circuits (ASICs), Field-Programmable Gate Arrays (FPGAs), etc.

Conversely, storage nodes can be allocated with hardware devices to facilitate storage tasks, such as storage devices (e.g., hard drives, etc.), memory, high-bandwidth network devices, physical storage media, etc.). It should be noted that in some instances, storage nodes can include processing devices (e.g., CPUs, etc.) to facilitate storage operations (e.g., read/write operations) and processing nodes can include storage devices (e.g., random access memory) to facilitate processing operations.

In some implementations, the computing environment 10 can be, or otherwise include, a software development environment. The computing environment 10 can include computing device(s), system(s), etc. that are utilized for developing software. For example, the computing system 12 can be a system for creating (i.e., developing) and/or maintaining a large software project (e.g., an application. To do so, the computing system 12 may maintain a codebase for the large software project, a code versioning system and/or versioning information for the codebase, etc.

The memory 16 of the computing system 12 can include a declarative API generator 18. The declarative API generator 18 can implement declarative API functionality for a legacy application 20 that includes an imperative API 22. In some implementations, the legacy application 20 can refer to an instance of the legacy application 20 that is executed on the computing system 12. Alternatively, the legacy application 20 can refer to an instance of the legacy application 20 that is executed separately from the computing system 12 within the computing environment 10.

The declarative API generator 18 can include a CRD generator 21. The CRD generator 21 can generate CRDs based on an imperative API specification 24. The imperative API specification 24 can be, or include, documentation, tutorials, guides, etc. that explain how to interact with the imperative API 22 of the legacy application 20. For example, assume that the legacy application 20 is a pet database application, and the imperative API 22 is a Representational State Transfer (REST)-ful API that accepts conventional RESTful API commands (e.g., POST, PUT, GET, DELETE, etc.). The imperative API specification 24 can describe a POST/pet command to add a new pet to the pet database. The imperative API specification 24 can describe the parameters accepted for the POST/pet command (e.g., pet name, breed, age, weight, temperament, etc.). The CRD generator 21 can generate a CRD for "pet" entities that defines the parameters as data fields for CRs or other data objects defined by the CRD.

Specifically, the CRD generator 21 can generate CRDs 26-1 - 26-N (generally, CRDs 26) and store the CRDs to a CRD repository 28. The CRDs 26 can each represent a particular type of entity. As described herein, an "entity" can refer to any type or manner of data object, construct, or the like within the legacy application 20. Examples of entities can include database entries, virtualized devices, containers, virtual machines, units of software instructions, etc.

To follow the depicted example, the imperative API specification 24 can describe an imperative API POST call to add a new instance of a virtualized device. The imperative API POST call can include a parameter (e.g., {DEV_TYPE}) to specify a type of device to be instantiated (e.g., a virtualized router, virtualized modem, virtualized Central Processing Unit (CPU), etc.). The CRD generator 21 can generate one or more CRDs based on the description of the imperative API POST call described in the imperative API specification 24.

It should be noted that the CRD generator 21 can generate CRDs with varying hierarchies and/or varying degrees of specificity. To follow the previous example, in some implementations, the CRD generator 21 may generate one CRD of the CRDs 26 to represent virtual device entities generally. The CRD can describe a "device type" field that corresponds to the {DEV_TYPE} parameter of the imperative API specification 24. Additionally, or alternatively, in some implementations, the CRD generator 21 can generate multiple CRDs of the CRDs 26, each of the CRDs corresponding to a particular device type.

In some implementations, the degree of hierarchy or specificity selected by the CRD generator 21 can be based on the inclusion of parameters (or lack thereof) in corresponding descriptions of imperative API commands within the imperative API specification 24. To follow the depicted example, the imperative API specification 24 describes a "/VDEV/{DEV_TYPE}/{INST_ID}" command that includes a parameter {DEV_TYPE} which indicates the type of virtual device to be instantiated (e.g., a VIRT_ROUTER, VIRT_N_SWITCH, etc.). If the imperative API specification 24 included further device-specific parameters (e.g., a number of active devices for a virtual router, a maximum bandwidth for a virtual storage node, etc.), the CRD generator 21 can determine to generate CRDs for each type of virtual device. In this manner, each of the CRDs for the virtual devices can include fields specific to the virtual devices. Alternatively, if the imperative API specification 24 does not include further device-specific parameters, the CRD generator 21 can determine to generate one CRD to represent all types of virtual devices.

The declarative API generator 18 can include an automated operator module 30. The automated operator module 30 can generate a unit of software instructions 32. The unit of software instructions 32 can, when executed, implement an automated operator 34. As described herein, an "automated operator" refers to a program, package, module, routine, collection of rules, decision tree, machine-learned model, etc. that can implement declarative interface functionality by acting as an intermediary between the imperative API 22 of the legacy application 20 and a code repository 36 for the legacy application 20 that serves as a "source of truth" for the correct state of the legacy application 20.

The automated operator module 30 can generate the unit of software instructions 32 that, when executed, implements the automated operator 34 based on the CRDs 26 and/or the imperative API specification 24. Specifically, in some implementations, the automated operator module 30 can include call mapping information 40. The call mapping information 40 can map imperative API calls described by the imperative API specification 24 to particular CRDs of the CRDs 26. More specifically, the call mapping information 40 can indicate, for each of the CRDs 26, the imperative API calls used to modify the state of the particular type of entity associated with the CRD. For example, if the CRD 26-1 is associated with virtual router devices, the call mapping information 40 can describe imperative API calls used to modify virtual router devices (e.g., adjust existing devices, add new devices, remove devices, etc.).

The automated operator module 30 can generate the unit of software instructions 32 based on the call mapping information 40. To follow the previous example, the automated operator module 30 can obtain the call mapping information 40 that describes the imperative API calls used to modify the virtual router devices. The automated operator module 30 can then generate a portion of the unit of software instructions 32. The portion of software instructions can define the behavior of the automated operator 34 when the state of virtual router entities is modified (the current state and/or the "correct" state). For example, the portion of software instructions can define imperative API calls to perform when a CR representing a virtual router is removed from the code repository 36. For another example, the portion of software instructions can define a CR generation process to generate a new CR in the code repository 36 to represent a virtual router device when an imperative API call to add a new virtual router device is intercepted.

More specifically, the automated operator 34 can be configured to ensure that a "current" state of the legacy application 20 matches a correct state of the legacy application 20. The "correct" state of the legacy application 20 can be defined by the CRs 38 included in the code repository 36. Each of the CRs 38 can represent an entity expected to be included in the legacy application 20. If one of the CRs 38 within the code repository 36 represents a corresponding entity that is not included in the legacy application 20, the automated operator 34 can identify a difference between the current state and the correct state of the legacy application 20.

The automated operator 34 can include a CR modifier 42. The CR modifier 42 can generate, modify, delete, etc. the CRs 38 included in the code repository 36. In some implementations, once the CRDs 26 are generated by the CRD generator 21, the CR modifier 42 can generate the CRs 38 based on the current state of the legacy application 20. Each of the CRs 38 can represent a particular entity currently included in the legacy application 20. In this manner, the automated operator 34 can establish a baseline "source of truth" within the code repository that accurately reflects the current state of the application. Subsequently, the CR modifier 42 can modify (e.g., adjust, add, delete, etc.) the CRs 38 within the code repository based on intercepted API calls. Once the CRs 38 have been modified, the automated operator 34 can make imperative API calls to the imperative API 22 so that the current state of the legacy application 20 matches the correct state of the legacy application 20 collectively defined by the plurality of CRs 38.

For example, assume that the legacy application 20 includes ten virtual router devices when the CRDs 26 are generated by the CRD generator 21 based on the imperative API specification 24. The automated operator 34 can generate ten of the CRs 38 to respectively represent the ten virtual router devices. Each of the ten CRs of the CRs 38 can be generated based on one of the CRDs 26 that is associated with virtual router devices. If the legacy application 20 also includes fifteen virtual network switches, the automated operator 34 can generate fifteen of the CRs 38 to respectively represent the fifteen virtual network switches based on another of the CRDs 26 that is associated with virtual network switches. Next, assume that the automated operator 34 intercepts an imperative API request to remove one of the ten virtual router devices. Based on the intercepted API call, the automated operator 34 can delete one of the ten CRs that respectively represent the ten virtual router devices.

In some implementations, the code repository 36 can include, or can be associated with, a legacy data store 43 (i.e., an existing data store). The legacy data store 43 can be a database, data warehouse, or the like that maintains the current application state of the legacy application 20, including existing entities currently implemented by the legacy application 20. To follow the previous example, if the legacy application 20 includes ten virtual network devices, the legacy data store 43 may include ten respective entries for the ten virtual network devices. As such, in some implementations, the automated operator 34 can process data from the legacy data store 43 with the CR modifier 42 to generate the CRs 38 based on the CRDs 26.

More specifically, the automated operator 34 can include a state difference identifier 44. The state difference identifier 44 can identify a difference between the current state of the legacy application 20 and the correct state of the legacy application 20. To do so, the state difference identifier 44 can obtain current application state information 46 and correct application state information 48. The current application state information 46 can be any type or manner of information that describes entities currently included in the legacy application 20, such as application state data (e.g., data generated during routine operation of the legacy application 20, data generated in response to a request related to the current state of the legacy application 20, etc.). For example, if the imperative API specification 24 describes an imperative API call to receive a list of all entities (e.g., GET/VDEV/{DEV_TYPE}/{*}), the automated operator 34 may perform that call to obtain the current application state information 46.

The "correct" application state for the legacy application 20 can be represented by the CRs 38 included in the code repository 36. As such, in some implementations, the correct application state information 48 can be a list or description of the CRs 38 currently included in the code repository 36. For example, the automated operator 34 may query the code repository 36 to obtain the correct application state information 48. The state difference identifier 44 can determine a difference in application states by comparing the current application state information 46 and the correct application state information 48.

To follow the illustrated example, the automated operator 34 can query the legacy application 20 and/or the legacy data store 43 via the imperative API 22 (e.g., via a GET call, etc.). In response, the automated operator 34 can obtain the current application state information 46. The current application state information 46 can be, or include, a structured data object (e.g., a Javascript Object Notation (JSON) object, etc.) that includes information related to two virtual router devices identified by identifiers "0X12_1" and "0X12_2." The automated operator 34 can obtain the correct application state information 48 by querying the code repository 36. In response, the automated operator 34 can obtain the correct application state information 48 that includes a list of three CRs from the CRs 38. Two of the three CRs can store the same identifiers "0X12_1" and "0X12_2" as the current application state information 46. The third CR of the three CRs can store a third identifier "0X12_3" that is not included in the current application state information 46.

The state difference identifier 44 can identify the difference between the current application state information 46 and the correct application state information 48 (e.g., that a third virtual router device is not included in the legacy application 20). In response, the automated operator 34 can generate new imperative API calls 54. The new imperative API calls 54 can, when received at the imperative API 22, cause the legacy application 20 to instantiate a third virtual router device with the identifier "0X12_3." In such fashion, implementations described herein can dynamically generate imperative API calls to implement declarative API functionality.

In some implementations, the automated operator 34 can include a call interceptor 50. The call interceptor 50 can intercept intercepted imperative API calls 52. Specifically, the call interceptor 50 can intercept the intercepted imperative API calls 52 such that the intercepted imperative API calls 52 do not reach the imperative API 22. The automated operator 34 can then modify the CRs 38 with the CR modifier 42 based on the intercepted imperative API calls 52 as described above. In some implementations, the intercepted imperative API calls 52 can include instructions to add a new entity, remove an existing entity, modify characteristics of an existing entity (e.g., operating parameters, configuration files, etc.), etc.

In some implementations, the memory 16 can include a machine learning module 55. The machine learning module 55 can handle various machine learning operations to facilitate some implementations of the present disclosure. To do so, the machine learning module 55 can include a machine-learned model and a model trainer. In some implementations, the machine learning module 55 can train the machine-learned model using the model trainer to generate the unit of software instructions 32, the CRs 38, the CRDs 26, etc. Additionally, or alternatively, in some implementations, the machine-learned model can be a pre-trained model, such as a Large Foundational Model (LFM) (e.g., a large language model, large multimodal model, etc.).

The model trainer can train the machine-learned models using various training or learning techniques, such as, for example, backwards propagation of errors. For example, a loss function can be backpropagated through the model(s) to update one or more parameters of the model(s) (e.g., based on a gradient of the loss function). Various loss functions can be used such as mean squared error, likelihood loss, cross entropy loss, hinge loss, and/or various other loss functions. Gradient descent techniques can be used to iteratively update the parameters over a number of training iterations.

In some implementations, performing backwards propagation of errors can include performing truncated backpropagation through time. The model trainer can perform a number of generalization techniques (e.g., weight decays, dropouts, etc.) to improve the generalization capability of the models being trained.

The machine-learned models utilized by the machine learning module 55 can include any type or manner of model(s), such as neural networks (e.g., deep neural networks) or other types of machine-learned models, including non-linear models and/or linear models. Neural networks can include feed-forward neural networks, recurrent neural networks (e.g., long short-term memory recurrent neural networks), convolutional neural networks or other forms of neural networks. Some example machine-learned models can leverage an attention mechanism such as self-attention. For example, some example machine-learned models can include multi-headed self-attention models (e.g., transformer models).

As a specific example, the declarative API generator 18 can use a machine-learned model from the machine learning module 55 to generate the CRDs 26. To do so, the declarative API generator 18 can process the imperative API specification 24 with a large language model of the machine learning module 55 alongside a prompt that describes instructions to generate Kubernetes CRDs to represent each entity related to the imperative API calls described by the imperative API specification.

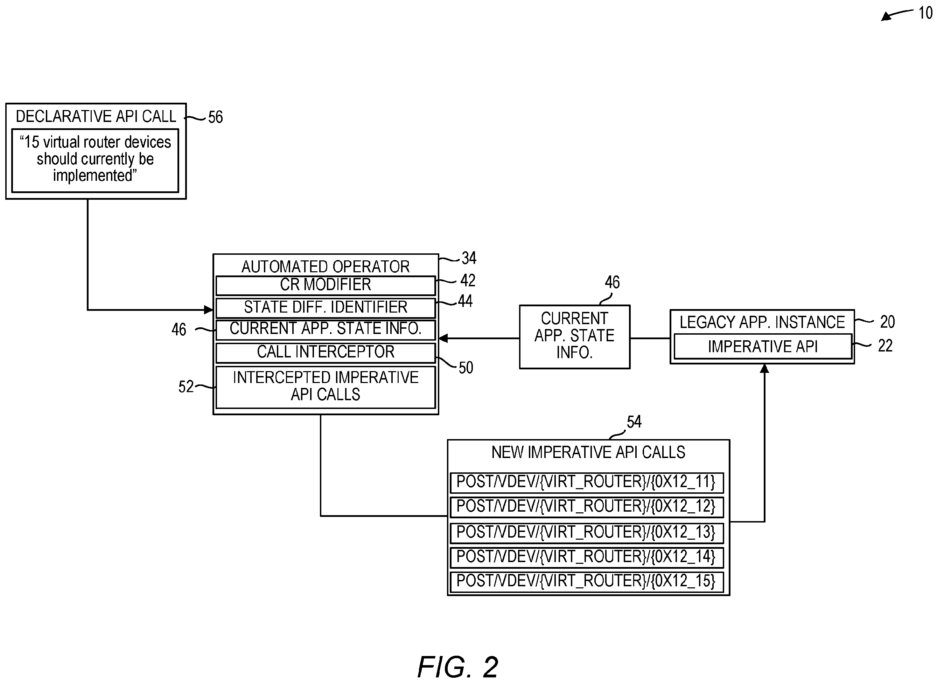

Figure 2 is a data flow diagram for leveraging the automated operator 34 of Figure 1 as a declarative API client according to some implementations of the present disclosure. Figure 2 will be discussed in conjunction with Figure 1. More specifically, once the CRDs 26 are established in the CRD repository 28, and the code repository 36 is populated by the CRDs 26 to accurately reflect a correct state of the legacy application 20, the automated operator 34 can be leveraged as a declarative API "client" or intermediary that can translate declarative API calls to imperative API calls accepted by the imperative API 22 while modifying the CRs 38 to maintain the correct state of the legacy application 20. It should be noted that the code repository 36 can be implemented by any computing device and/or system inside the computing environment 10 or external to the computing environment 10.

The automated operator 34 can intercept a declarative API call 56 with the call interceptor 50. The declarative API call 56 can describe a desired application state. To follow the illustrated example, the declarative API call 56 can indicate a desire for the legacy application 20 to implement fifteen virtual router devices. The automated operator 34 can obtain the current application state information 46 from the CRD repository 28. The current application state information 46 can indicate that ten virtual router devices are currently implemented by the legacy application 20. The automated operator 34 can identify the difference between the current application state information 46 and the declarative API call 56 using the state difference identifier 44. Specifically, as the declarative API call 56 describes a desired state of the legacy application 20, the state difference identifier 44 can determine a difference between desired state of the legacy application 20 (e.g., as described by the declarative API call 56) and the current application state information 46.

To follow the depicted example, based on the difference identified with the state difference identifier 44 (i.e., a "new difference" compared to the prior difference identified with regards to Figure 1), the automated operator 34 can determine that five new virtual router devices (i.e., five new entities) should be implemented by the legacy application 20. The automated operator 34 can first modify the CRs 38 with the CR modifier 42 so that the CRs 38 accurately represent a correct application state for the legacy application in light of the declarative API call 56. The automated operator 34 can modify the CRs 38 by generating five new CRs to represent the five new virtual router devices to be implemented.

The automated operator 34 can further generate the new imperative API calls 54 based on the declarative API call 56. More specifically, automated operator 34 can select imperative API calls described by the imperative API specification 24 (e.g., based on the call mapping information 40) that, when ingested by the imperative API 22, will cause the legacy application 20 to instantiate the five new virtual router devices. For example, the new imperative API calls 54 can include five separate imperative API calls that each instantiate a respective virtual device. In such fashion, implementations described herein enable the creation of an automated operator that serves as an intermediary to enable declarative API functionality for existing imperative APIs.

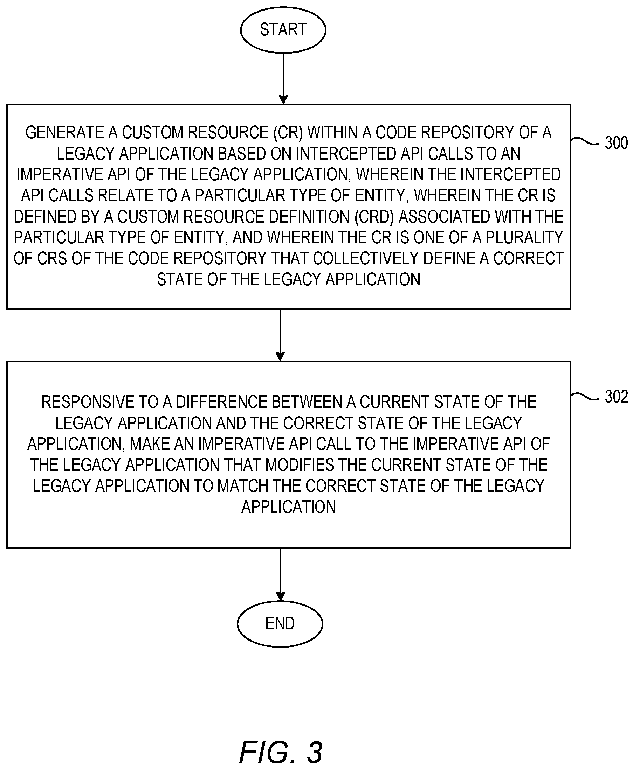

Figure 3 is a flowchart illustrating operations performed by the computing system of Figure 1 for construction of declarative APIs for imperative APIs using an automated operator, according to one example. Elements of Figure 1 are referenced in describing Figure 3 for the sake of clarity. In Figure 3, operations begin with a processor device of a computing device, computing system, network node, etc., such as the processor device(s) 14 of the computing system 12 of Figure 1. The processor device(s) 14 are to generate a CR 38-1 within a code repository 36 of a legacy application 20 based on intercepted imperative API calls 52 to an imperative API 22 of the legacy application 20, wherein the intercepted imperative API calls 52 relate to a particular type of entity, wherein the CR 38-1 is defined by a CRD 26-1 associated with the particular type of entity, and wherein the CR 38-1 is one of a plurality of CRs 38 of the code repository 36 that collectively define a correct state of the legacy application 20 (block 300). The processor device(s) 14 are to, responsive to a difference between a current state of the legacy application 20 (e.g., current application state information 46) and the correct state of the legacy application 20 (e.g., correct application state information 48), make, by an automated operator 34 implemented by the computing system 12, an imperative API call 54 to the imperative API 22 of the legacy application 20 that modifies the current state of the legacy application 20 to match the correct state of the legacy application 20 (block 302).

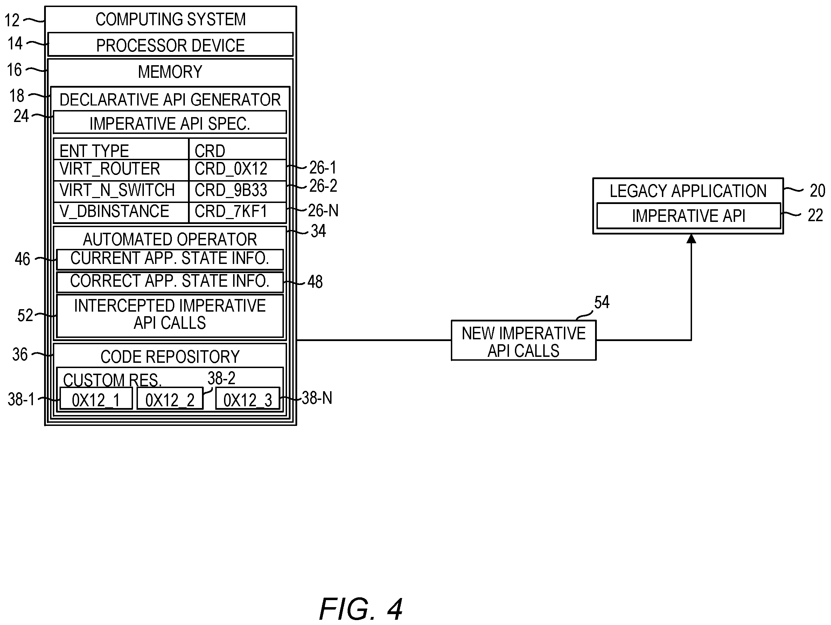

Figure 4 is a block diagram of the computing device of Figure 1 for construction of declarative APIs for imperative APIs using an automated operator, according to one example. Elements of Figure 1 are referenced in describing Figure 4 for the sake of clarity. In the example of Figure 4, the computing system 12 includes a memory 16 and processor device(s) 14 coupled to the memory 16. The processor device(s) 14 are to generate a CR 38-1 within a code repository 36 of a legacy application 20 based on intercepted imperative API calls 52 to an imperative API 22 of the legacy application 20. The intercepted imperative API calls 52 relate to a particular type of entity. The CR 38-1 is defined by a CRD 26-1 associated with the particular type of entity. The CR 38-1 is one of a plurality of CRs 38 of the code repository 36 that collectively define a correct state of the legacy application 20. The processor device(s) 14 are to, responsive to a difference between a current state of the legacy application 20 and the correct state of the legacy application 20, make an imperative API call 54 to the imperative API 22 of the legacy application 20 with an automated operator 34 implemented by the computing system 12. The new imperative API calls 54 modify the current state of the legacy application 20 to match the correct state of the legacy application 20.

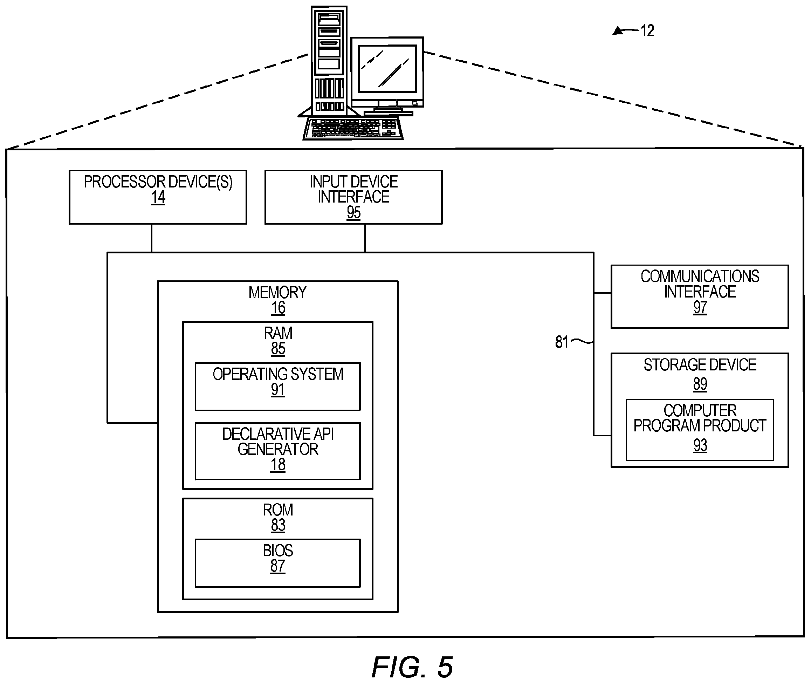

Figure 5 is a block diagram of the computing system 12 suitable for implementing examples according to one example. The computing system 12 may comprise any computing or electronic device capable of including firmware, hardware, and/or executing software instructions to implement the functionality described herein, such as a computer server, a desktop computing device, a laptop computing device, a smartphone, a computing tablet, or the like. The computing system 12 includes the processor device(s) 14, the memory 16, and a system bus 81. The system bus 81 provides an interface for system components including, but not limited to, the memory 16 and the processor device(s) 14. The processor device(s) 14 can be any commercially available or proprietary processor.

The system bus 81 may be any of several types of bus structures that may further interconnect to a memory bus (with or without a memory controller), a peripheral bus, and/or a local bus using any of a variety of commercially available bus architectures. The memory 16 may include non-volatile memory 83 (e.g., read-only memory (ROM), erasable programmable read-only memory (EPROM), electrically erasable programmable read-only memory (EEPROM), etc.), and volatile memory 85 (e.g., random-access memory (RAM)). A basic input/output system (BIOS) 87 may be stored in the non-volatile memory 83 and can include the basic routines that help to transfer information between elements within the computing system 12. The volatile memory 85 may also include a high-speed RAM, such as static RAM, for caching data.

The computing system 12 may further include or be coupled to a non-transitory computer-readable storage medium such as the storage device 89, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 89 and other drives associated with computer-readable media and computer-usable media may provide non-volatile storage of data, data structures, computer-executable instructions, and the like.

A number of modules can be stored in the storage device 89 and in the volatile memory 85, including an operating system 91 and one or more program modules, such as the declarative API generator 18, which may implement the functionality described herein in whole or in part. All or a portion of the examples may be implemented as a computer program product 93 stored on a transitory or non-transitory computer-usable or computer-readable storage medium, such as the storage device 89, which includes complex programming instructions, such as complex computer-readable program code, to cause the processor device(s) 14 to carry out the steps described herein. Thus, the computer-readable program code can comprise software instructions for implementing the functionality of the examples described herein when executed on the processor device(s) 14. The processor device(s) 14, in conjunction with the declarative API generator 18 in the volatile memory 85, may serve as a controller, or control system, for the computing system 12 that is to implement the functionality described herein.

Because the declarative API generator 18 is a component of the computing system 12, functionality implemented by the declarative API generator 18 may be attributed to the computing system 12 generally. Moreover, in examples where the declarative API generator 18 comprises software instructions that program the processor device(s) 14 to carry out functionality discussed herein, functionality implemented by the declarative API generator 18 may be attributed herein to the processor device(s) 14.

An operator, such as a user, may also be able to enter one or more configuration commands through a keyboard (not illustrated), a pointing device such as a mouse (not illustrated), or a touch-sensitive surface such as a display device. Such input devices may be connected to the processor device(s) 14 through an input device interface 95 that is coupled to the system bus 81 but can be connected by other interfaces such as a parallel port, an Institute of Electrical and Electronic Engineers (IEEE) 1394 serial port, a Universal Serial Bus (USB) port, an IR interface, and the like. The computing system 12 may also include the communications interface 97 suitable for communicating with the network as appropriate or desired. The computing system 12 may also include a video port configured to interface with a display device, to provide information to the user.

Individuals will recognize improvements and modifications to the preferred examples of the disclosure. All such improvements and modifications are considered within the scope of the concepts disclosed herein and the claims that follow.

## Claims

1. A method comprising:
generating, by a computing system comprising one or more processor devices, a Custom Resource (CR) within a code repository of a legacy application based on intercepted Application Programming Interface (API) calls to an imperative API of the legacy application, wherein the intercepted API calls relate to a particular type of entity, wherein the CR is defined by a Custom Resource Definition (CRD) associated with the particular type of entity, and wherein the CR is one of a plurality of CRs of the code repository that collectively define a correct state of the legacy application; and
responsive to a difference between a current state of the legacy application and the correct state of the legacy application, making, by an automated operator implemented by the computing system, an imperative API call to the imperative API of the legacy application that modifies the current state of the legacy application to match the correct state of the legacy application.

2. The method of claim 1, wherein the plurality of CRs is defined by a plurality of CRDs comprising the CRD.

3. The method of claim 2, wherein, prior to generating the CR within the code repository of the legacy application, the method comprises:
intercepting, by the computing system, the intercepted API calls to the imperative API, wherein the intercepted API calls comprise one or more imperative API calls, the one or more imperative API calls indicative of requests to at least one of:
add a new entity of the particular type of entity;
modify a characteristic of an existing entity of the particular type of entity; or
remove the existing entity of the particular type of entity.

4. The method of claim 3, wherein, prior to intercepting the intercepted API calls, the method comprises:
obtaining, by the computing system, API specification information for the imperative API of the legacy application, wherein the API specification information defines behavior of the imperative API; and
generating, by the computing system, the plurality of CRDs based on the API specification information.

5. The method of claim 4, wherein, prior to making the imperative API call, the method comprises:
identifying, by the automated operator implemented by the computing system, the difference between the current state of the legacy application and the correct state of the legacy application.

6. The method of claim 5, wherein intercepting the intercepted API calls to the imperative API comprises:
intercepting, by the computing system, a first imperative API call of the one or more imperative API calls, the first imperative API call indicative of a request to add the new entity of the particular type of entity;
wherein identifying the difference between the current state of the legacy application and the correct state of the legacy application comprises:
determining, by the automated operator implemented by the computing system, that the current state of the legacy application comprises a first quantity of entities of the particular type of entity associated with the CRD; and
determining, by the automated operator implemented by the computing system, that the first quantity of entities of the particular type of entity is less than a second quantity of CRs within the code repository that are defined by the CRD.

7. The method of claim 4, wherein the generating the plurality of CRDs based on the API specification information further comprises:
generating, by the computing system, a unit of software instructions that, when executed, implements the automated operator, wherein the unit of software instructions is based on the plurality of CRDs; and
executing, by the computing system, the unit of software instructions to implement the automated operator.

8. The method of claim 4, wherein generating the plurality of CRDs based on the API specification information comprises:
processing, by the computing system, the API specification information with a machine-learned language model to obtain the plurality of CRDs.

9. The method of claim 4, wherein generating the plurality of CRDs based on the API specification information further comprises:
based on the API specification information, generating, by the computing system, call mapping information that indicates one or more types of imperative API calls to make when a particular type of difference is identified between the current state of the legacy application and the correct state of the legacy application;
wherein making the one or more imperative API calls to the imperative API of the legacy application comprises selecting, by the computing system, the one or more imperative API calls based on the call mapping information.

10. The method of claim 4, wherein generating the plurality of CRDs based on the API specification information further comprises:
obtaining, by the computing system, application state data from an existing data store for the legacy application;
determining, by the computing system, that the current state of the legacy application comprises a plurality of existing entities of a first type of entity associated with a first CRD of the plurality of CRDs; and
for each existing entity of the plurality of existing entities of the first type of entity, generating, by the computing system, a particular CR of the plurality of CRs within the code repository of the legacy application based on the first CRD, wherein the particular CR represents the existing entity within the current state of the legacy application, and wherein the particular CR is defined by the first CRD.

11. The method of claim 1, further comprising:
receiving, by the automated operator implemented by the computing system, a declarative API call for the legacy application, wherein the declarative API call defines a desired state of the legacy application different than the current state of the legacy application;
generating, by the computing system, one or more additional CRs for the legacy application within the code repository to modify the correct state of the legacy application to match the desired state of the legacy application; and
making, by the automated operator implemented by the computing system, one or more additional imperative API calls to the imperative API of the legacy application that modify the current state of the legacy application to match the desired state of the legacy application.

12. The method of claim 11, wherein making the one or more additional imperative API calls for the imperative API of the legacy application comprises:
identifying, by the automated operator implemented by the computing system, a new difference between the current state of the legacy application and the correct state of the legacy application; and
responsive to identifying the new difference, generating, by the automated operator implemented by the computing system, the one or more additional imperative API calls to the imperative API of the legacy application that modify the current state of the legacy application to match the desired state of the legacy application.

13. A computing system comprising:
one or more processor devices configured to carry out the method of any of claims 1 to 12.

14. A non-transitory computer-readable storage medium that includes executable instructions to cause one or more processor devices to carry out the method of any of claims 1 to 12.
